# EUROPEAN PATENT APPLICATION

(11) **EP 1 699 070 A1**
(43) Date of publication of application: **06.09.2006**
(21) Application number: 06001741.5
(22) Date of filing: 27.01.2006
(51) Int. Cl.: H01J 61/44

(54) **Method of improving low temperature lumen maintenance of an electrodeless lamp and electrodeless lamp with improved low temperature lumen maintenance**

(30) Priority: 23.02.2005 US 906514
(71) Applicant: OSRAM-SYLVANIA INC., 01923 Danvers, MA (US)
(72) Inventor: Dutta, Arunava, Winchester MA 01890 (US); Martin, Robert, Nicholasville, KY 40356 (US)
(74) Representative: Pokorny, Gerd

(57) **Abstract**

A method of increasing low temperature lumen maintenance of an electrodeless lamp whose glass body has an interior surface with red emitting Y₂O₃:Eu (YOE) phosphors and green emitting (Ce,Tb)MgAl₁₁O₁₉ (CAT) phosphors thereon, includes coating aluminum oxide directly on the CAT phosphors and/or the YOE phosphors (preferably at least the CAT phosphors). The interior surface of the glass body may also have blue emitting BaMgAl₁₁O₁₇:Eu (BAM) phosphors thereon. The low temperature lumen maintenance is a ratio of (a) lamp lumens at a first number of lamp operating hours to (b) lamp lumens at a reference number of lamp operating hours, when the lamp is operated with a bulb wall temperature of 35°C or lower.

## Description

### Background of the Invention

The present invention is directed to method of improving lumen maintenance of an electrodeless lamp and to an electrodeless lamp with improved lumen maintenance. Electrodeless lamps are disclosed in U.S. Patents 5,834,905 and 6,777,867.

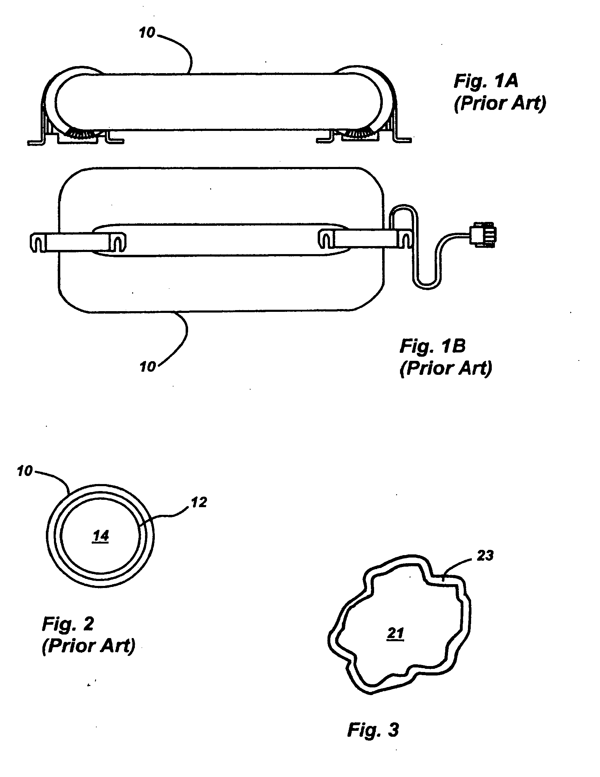

Lumen maintenance is a ratio, expressed as a percentage, of (i) lamp lumens output at a predetermined number of lamp operating hours to (ii) lamp lumens output at a reference number of lamp operating hours (typically 100 hours). For example, the Icetron™ lamp sold by OSRAM SYLVANIA (generally described in the above-noted U.S. Patent 6,777,867 and shown in Figure 1) is rated to have a lumen maintenance of 70% at 60,000 hours.

Of particular interest in the present application is the decline of lumen maintenance when the electrodeless lamp is operated in a cold environment, for example when the bulb wall temperature of the lamp is 35°C or lower. It has been found that some electrodeless lamps have detectably lower lumen maintenance when operated at a low temperature compared to electrodeless lamps operated at a normal ambient temperature. When an electrodeless lamp is operated at room temperature (normal ambient), the bulb wall temperature of the lamp typically is 70° to 80°C and can reach 110°C in an enclosed fixture. By contrast, when an electrodeless lamp is operated outdoors in a cold environment, the bulb wall temperature may be 35°C or lower. Lamp operation in the cold environment has been found to reduce lumen maintenance below the rated amount.

### Summary of the Invention

An object of the present invention is to provide a novel method of improving low temperature lumen maintenance of an electrodeless lamp whose glass body has an interior surface with red and green emitting phosphors thereon, where the method includes coating the red emitting phosphors and/or the green emitting phosphors with an aluminum-containing coating to thereby increase the low temperature lumen maintenance of the lamp, where the low temperature lumen maintenance is a ratio of (a) lamp lumens at a first number of lamp operating hours to (b) lamp lumens at a reference number of lamp operating hours, when the lamp is operated with a bulb wall temperature of 35°C or lower.

A further object of the present invention is to provide a novel method of increasing low temperature lumen maintenance of an electrodeless lamp whose glass body has an interior surface with red emitting Y₂O₃:Eu (YOE) phosphors and green emitting (Ce,Tb)MgAl₁₁O₁₉ (CAT) phosphors thereon, in which an aluminum-containing coating of aluminum oxide or aluminum oxynitride is coated directly on the CAT phosphors and/or the YOE phosphors (preferably at least the CAT phosphors) to increase low temperature lumen maintenance.

A yet further object of the present invention is to provide a novel electrodeless lamp that includes a glass body containing a medium that generates UV radiation, where the glass body has an inner surface with red emitting Y₂O₃:Eu (YOE) phosphors and green emitting (Ce,Tb)MgAl₁₁O₁₉ (CAT) phosphors thereon, the YOE and CAT phosphors emitting light when excited by the UV radiation in the absence of an electrode, and where the YOE and/or the CAT phosphors (preferably the CAT phosphors) are coated with an aluminum-containing coating to thereby improve the low temperature lumen maintenance of the lamp. The interior surface of the glass body may also have blue emitting BaMgAl₁₁O₁₇:Eu (BAM) phosphors thereon.

These and other objects and advantages of the invention will be apparent to those of skill in the art of the present invention after consideration of the following drawings and description of preferred embodiments.

### Brief Description of the Drawings

Figures 1 a and 1 b are side and top views of an electrodeless lamp of the prior art.

Figure 2 is a cross section of a glass wall of the electrodeless lamp of Figure 1 illustrating the phosphor coating.

Figure 3 is a pictorial representation of a cross section of a phosphor particle showing the coating thereon.

### Description of Preferred Embodiments

An electrodeless lamp of the prior art shown in Figures 1 a-b and 2 includes a glass body 10 whose interior surface is coated with a blend of phosphors 12 selected to emit light of a desired color. For example, the blend of phosphors may include red emitting YOE, a blue emitting phosphor, and green emitting (Ce, Tb) MgAl₁₁O₁₉ (also known as CAT). The amount of each phosphor is selected depending on the color to be achieved. The YOE and CAT combined may comprise about 60 to 100% by weight of the phosphor blend, with the blue emitting phosphor, preferably BAM, making up the difference. More preferably, the blend contains from about 30 to about 40 weight percent (wt.%) of CAT. In another preferred embodiment, the blend contains from about 30 to about 70 wt.% YOE.

In the invention, the low temperature lumen maintenance of an electrodeless lamp such as described above and whose glass body has an interior surface with red and green emitting phosphors thereon is improved by coating the red emitting phosphors and/or the green emitting phosphors with an aluminum-containing coating to thereby increase the low temperature lumen maintenance of the lamp. The aluminum-containing coating is coated directly on the respective phosphor particles, such as shown in Figure 3.

The low temperature lumen maintenance is the above-described ratio of (a) lamp lumens at a predetermined number of lamp operating hours to (b) lamp lumens at a reference number of lamp operating hours, when the lamp is operated with a bulb wall temperature of 35°C or lower.

In a preferred embodiment, the red emitting phosphors are YOE and the green emitting phosphors are CAT and the aluminum-containing coating is an aluminum oxide coating that is coated directly on either the YOE phosphors or the CAT phosphors, or both. Low temperature lumen maintenance is improved most by coating the alumina directly on the CAT phosphors and may be yet further improved by coating the alumina directly on the YOE phosphors as well. The alumina coating may be applied in accordance with the process described in U.S. Patent No. 4,585,673. The aluminum-containing coating also may be aluminum oxynitride.

The phosphors on the interior surface of the glass body may also include blue emitting phosphors such as BAM. Oxidation of Eu²⁺ to Eu³⁺ in BAM adversely affects the blue emission of the BAM. The conventional process (e.g., described in the above-noted U.S. Patent 4,585,673) for coating phosphors oxidizes the Eu²⁺ to Eu³⁺ and thus BAM phosphors in the electrodeless lamp are not coated when this conventional coating process is to be used.

By way of further explanation, tests have shown that coating the CAT phosphors with the alumina coating provides a significant improvement in low temperature lumen maintenance. A comparison of lamps with uncoated and coated CAT phosphors, with high (about 110°C) and low (less than about 35°C) bulb wall temperatures, revealed an improvement in lumen maintenance at the low bulb wall temperatures from 81% to 88% when the coated CAT phosphors were used. Similar tests for coated YOE revealed a less significant improvement, but an improvement nonetheless.

The electrodeless lamp of the invention includes a glass body 10 containing a medium 14 (Figure 2) that generates UV radiation, where the glass body has an inner surface with the red emitting YOE phosphors and the green emitting CAT phosphors thereon that emit light when excited by the UV radiation. Preferably at least the CAT particles are coated with the aluminum-containing coating to thereby improve the low temperature lumen maintenance of the lamp. The YOE particles may also be coated. The interior surface of the glass body may also have blue emitting BAM phosphors thereon that are not coated, depending on the coating process used.

While embodiments of the present invention have been described in the foregoing specification and drawings, it is to be understood that the present invention is defined by the following claims when read in light of the specification and drawings.

## Claims

1. A method of increasing low temperature lumen maintenance of an electrodeless lamp whose glass body has an interior surface with a blend of red emitting phosphors and green emitting phosphors thereon, the method comprising the step of coating the red emitting phosphors and/or the green emitting phosphors with an aluminum-containing coating to thereby increase the low temperature lumen maintenance of the lamp.

2. The method of claim 1, wherein the red emitting phosphors comprise Y₂O₃:Eu³+ (YOE) and the green emitting phosphors comprise (Ce,Tb)MgAl₁₁O₁₉ (CAT) and wherein the aluminum-containing coating is an aluminum oxide coating that is coated directly on the individual particles of the YOE phosphors and/or the CAT phosphors.

3. The method of claim 2, wherein the aluminum oxide coating is coated directly on both the YOE and the CAT phosphors.

4. The method of claim 1, wherein the green emitting phosphors comprise (Ce,Tb)MgAl₁₁O₁₉ (CAT) and wherein the aluminum-containing coating is coated only on the CAT phosphors.

5. The method of claim 1, wherein the red emitting phosphors comprise Y₂O₃:EU³⁺ (YOE) and wherein the aluminum-containing coating is coated only on the YOE phosphors.

6. The method of claim 1, wherein the interior surface of the glass body also has blue emitting phosphors thereon.

7. The method of claim 6, wherein the blue emitting phosphors comprise BaMgAl₁₁O₁₇:Eu (BAM).

8. The method of claim 2 wherein the CAT and YOE phosphors comprise from about 60 to 100% by weight of the blend.

9. The method of claim 2 wherein the CAT phosphor comprises from about 30 to about 40% by weight of the blend.

10. The method of claim 9 wherein the YOE phosphor comprises from about 30 to about 70% by weight of the blend and the blend further contains a blue emitting BaMgAl₁₁O₁₇:Eu (BAM) phosphor.

11. A method of increasing low temperature lumen maintenance of an electrodeless lamp whose glass body has an interior surface with red emitting Y₂O₃:Eu³⁺ (YOE) phosphors and green emitting (Ce,Tb)MgAl₁₁O₁₉ (CAT) phosphors thereon, the respective phosphors emitting light when excited by UV radiation in the absence of an electrode, the method comprising the step of coating aluminum oxide directly on the CAT phosphors, the low temperature lumen maintenance being a ratio of (a) lamp lumens at a first number of lamp operating hours to (b) lamp lumens at a reference number of lamp operating hours, when the lamp is operated with a bulb wall temperature of 35°C or lower.

12. The method of claim 11, wherein the aluminum oxide also is coated directly on the YOE phosphors.

13. The method of claim 11, wherein the interior surface of the glass body also has blue emitting phosphors thereon that comprise BaMgAl₁₁O₁₇:Eu (BAM).

14. An electrodeless lamp comprising:
a glass body containing a medium that generates UV radiation, said glass body having in inner surface with a blend of red emitting Y₂O₃:Eu (YOE) phosphors and green emitting (Ce,Tb)MgAl₁₁O₁₉ (CAT) phosphors thereon, the YOE and CAT phosphors emitting light when excited by the UV radiation in the absence of an electrode, and an aluminum-containing coating that is coated directly on the YOE phosphors and/or the CAT phosphors to thereby increase the low temperature lumen maintenance of the lamp.

15. The lamp of claim 14, wherein the aluminum-containing coating is an aluminum oxide coating that is coated directly on the individual particles of the YOE phosphors and/or the CAT phosphors.

16. The lamp of claim 14, wherein the aluminum-containing coating is coated only on the CAT phosphors.

17. The lamp of claim 14, wherein the aluminum-containing coating is coated only on the YOE phosphors.

18. The lamp of claim 14, wherein the interior surface of said glass body also has blue emitting BaMgAl₁₁O₁₇:Eu (BAM) phosphors thereon.

19. The lamp of claim 15, wherein the CAT and YOE phosphors comprise from about 60 to 100% by weight of the blend.

20. The method of claim 15 wherein the CAT phosphor comprises from about 30 to about 40% by weight of the blend.

21. The method of claim 20 wherein the YOE phosphor comprises from about 30 to about 70% by weight of the blend and the blend further contains a blue emitting BaMgAl₁₁O₁₇:Eu (BAM) phosphor.
